# EUROPEAN PATENT SPECIFICATION

(11) **EP 1 843 492 B1**
(45) Date of publication and mention of the grant of the patent: **16.03.2011**
(21) Application number: 06712191.3
(22) Date of filing: 23.01.2006
(51) Int. Cl.: H04B 1/707, H04B 7/26

(54) **MOBILE COMMUNICATION TERMINAL AND METHOD FOR CONTROLLING ACTIVATION OF MULTI-PATH INTERFERENCE REMOVING APPARATUS**
MOBILES KOMMUNIKATIONSENDGERÄT UND VERFAHREN ZUR STEUERUNG DER AKTIVIERUNG EINES MEHRWEGE-INTERFERENZUNTERDRÜCKUNGSGERÄTS
TERMINAL DE COMMUNICATION MOBILE ET PROCEDE DE COMMANDE D'ACTIVATION D'APPAREIL D'ELIMINATION D'INTERFERENCE MULTI-TRAJETS

(30) Priority: 24.01.2005 JP 2005016098
(43) Date of publication of application: 10.10.2007
(60) Divisional application: 09165281.8
(73) Proprietor: NTT DoCoMo, Inc., Chiyoda-Ku Tokyo 100-6150 (JP)
(72) Inventor: IIZUKA, Yousuke, c/o Intellectual Property Department, Chiyoda-ku, Tokyo 100615 (JP); OGAWA, Shinsuke, c/o Intellectual Property Department, Chiyoda-ku, Tokyo 100615 (JP); NAKAMORI, Takeshi, c/o Intellectual Property Department, Chiyoda-ku, Tokyo 100615 (JP)
(74) Representative: Viering, Jentschura & Partner
(86) International application number: PCT/JP2006/300975
(87) International publication number: WO 2006/078019

(56) References cited:
- EP-A- 1 309 096
- JP-A- 11 177 474
- JP-A- 2003 051 764
- JP-A- 2003 506 994

## Description

### Technical Field

The present invention relates to a mobile communication terminal and a method for controlling activation of multi-path interference removing apparatus.

### Background Art

In recent years, the Internet has experienced rapid proliferation and there has been progress with respect to the diversification and increased capacities of information. This has been accompanied by active research on and development of the next generation wireless access system for implementing high-speed wireless communication also in the field of mobile communications.

In wireless communications, a signal (desired wave) transmitted by the base station produces a delayed wave as a result of reflection and diffraction or the like. Hence, a mobile communication terminal receives desired waves and also delayed waves. The delayed wave is the primary cause of multi-path interference and produces a drop in throughput and an increase in the error rate and has an adverse influence on the reception characteristic of the mobile communication terminal. In order to reduce the effect of such multi-path interference that is exerted by the delayed wave, a method of removing multi-path interference by using a linear equalizer has been proposed. (See Non-patent document 1.)

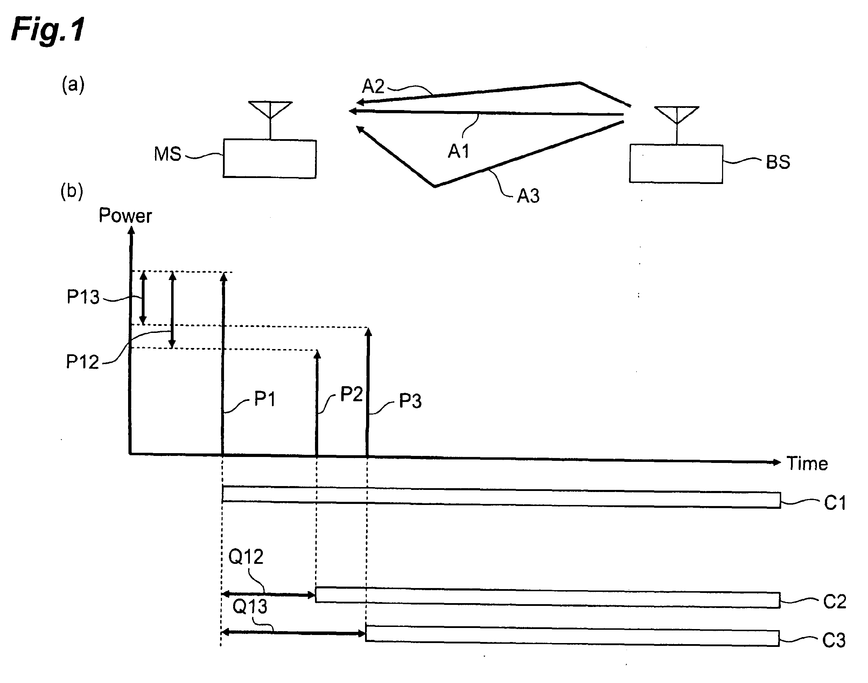

The operational procedure during multi-path interference removal using a linear equalizer will now be described by using Figs. 1 to 3.

First, as shown in Fig. 1, the mobile communication terminal MS despreads the Common Pilot Channels (CPICH) C1 to C3 transmitted by the base station BS and creates a delay profile shown in (b) of Fig. 1. Furthermore, measurement of the reception power P1 to P3 of the reception paths A1 to A3 respectively and the delay amounts (means the same as the reception timing and delay time) Q12 and Q13 is performed on the basis of the delay profile. In this measurement, a well-known measurement method that is performed by a normal CDMA compatible-type mobile communication terminal, for example, can be used. Delay amount Q12 is the difference in the delay time until receipt of the reception path A2 (delayed wave) after receiving a reception path A1 and delay amount Q13 is the difference in the delay amount until receipt of a reception path A3 (delayed wave) after receipt of the reception path A1. The horizontal axis of the delay profile shown in (b) of Fig. 1 represents time and the vertical axis represents reception power. Furthermore, P12 shown in (b) of Fig. 1 represents the difference in power between the reception power P 1 of the reception path A1 and the reception power P2 of the reception path A2 and P13 represents the difference in power between the reception power P1 of the reception path A1 and the reception power P3 of the reception path A3.

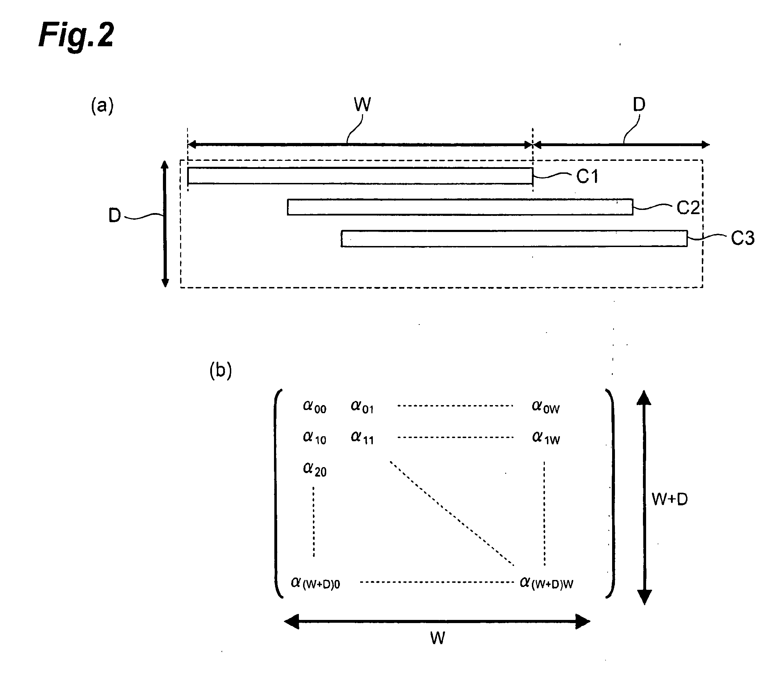

The channel matrix shown in (b) of Fig. 2 is generated in accordance with the maximum delay amount D and the sample count W (can be set optionally) of the interference removing apparatus, which are specified beforehand, on the basis of a channel estimate measured by means of channel estimation for each reception path and the delay profile shown in (a) of Fig. 2. (a) of Fig. 2 shows only the part at the bottom of the delay profile shown in (b) of Fig. 1.

Thereafter, the multi-path interference is removed by generating a weighting matrix on the basis of the channel matrix thus generated and multiplying the weighting matrix by the channel on which the data information is actually carried.

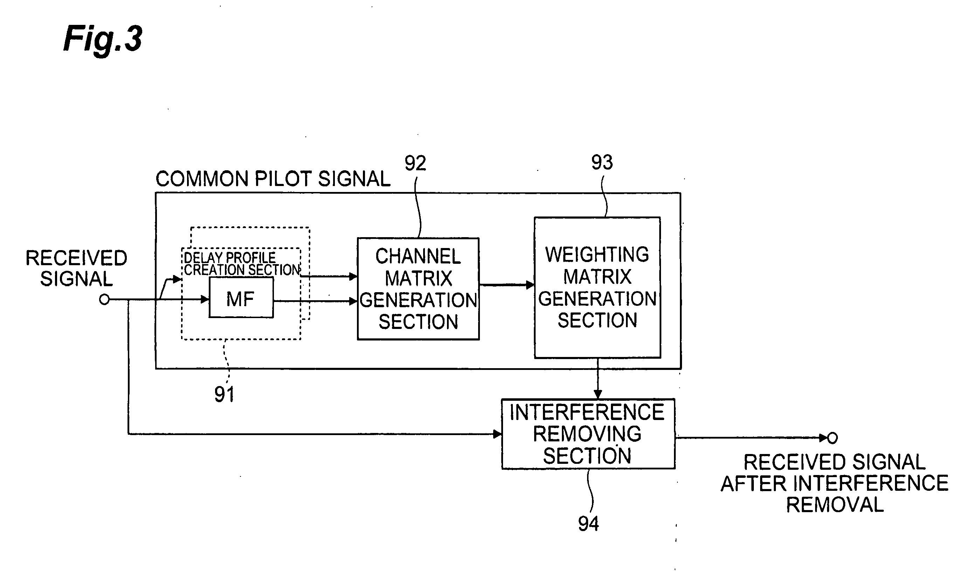

The operating procedure during conventional interference removal will now be described specifically with respect to Fig. 3.

First, a delay profile creation section 91 creates a delay profile shown in (b) of Fig. 1, for example, by despreading a signal that is transmitted by the base station by using a Common Pilot Channel. The delay profile creation section 91 measures the reception powers P1 to P3 of the respective reception paths A1 to A3 and delay amounts Q12 and Q13 on the basis of the delay profile shown in (b) of Fig. 1. Measurement of the reception powers and delay amounts can employ a common measurement method that is performed by using a normal CDMA-compatible-type mobile communication terminal, for example. The delay profile creation section 91 has an MF (Matched Filter) function.

Thereafter, a channel matrix generation section 92 generates the channel matrix shown in (b) of Fig. 2 on the basis of the sample count W and maximum delay amount D shown in (a) of Fig. 2. The channel matrix is represented as a (W+D) row × W column matrix. Thereafter, a weighting matrix generation section 93 generates a weighting matrix by performing an inverse matrix calculation on the channel matrix shown in (b) of Fig. 2. Thereafter, the interference removing section 94 removes multi-path interference by multiplying the data on the channel by the weighting matrix.

Patent document 1 discloses to selectively activate interference suppression, based on the demodulating method. Information about the demodulating method is received at the mobile station in a control signal sent from the base station. The interference suppression is selectively activated, based on whether or not communication data is received at the mobile station

"Non-patent document 1" is A. Klein, "Data Detection Algorithms Specially Designed for the Downlink of Mobile Radio Systems," Proc of IEEE VTC'97, pages 203 to 207, Phoenix, May 1997.T. Kawamura, K. Higuchi, Y. Kishiyama, and M. Sawahashi, "Comparison between multi-path interference canceller and chip equalizer in HSDPA in multi-path channel," Proc. of IEEE VTC 2002, pages 459 to 463,Birmingham, May 2002.

"Patent document 1" is EP 1 309 096 A1.

### Disclosure of the Invention

### Problem to be Solved by the Invention

By the way, because signal processing that is adapted to the chip-unit matrix calculation and the number of multi-paths is required in cases where multi-path interference removal is performed in accordance with the aforementioned conventional operating procedure by using a highly accurate equalizer, the calculation frequency of the mobile communication terminal increases and the power consumption increases. Furthermore, as a result of the communication active state and reception environment, a situation where the results of applying the multi-path interference removal method are diminished or a situation where the reception characteristic is furthermore degraded can arise. Such a situation can arise in cases where the effect of an interference wave from another base station is large or a case where the channel estimation accuracy for generating a channel matrix during high-speed motion deteriorates, for example.

### Means for Solving the Problem

Therefore, in order to resolve the above problem, an object of the present invention is to provide a mobile communication terminal and a method for controlling the startup of a multi-path interference removing apparatus that are capable of suppressing an increase in the power consumption and degradation of the reception characteristic that can arise as a result of installing the multi-path interference removing apparatus.

The mobile communication terminal of the present invention is a mobile communication terminal installed with a multi-path interference removing apparatus for removing multi-path interference, characterized by comprising: judgment module for judging whether to activate the multi-path interference removing apparatus on the basis of a communication-related control signal; and control module for activating the multi-path interference removing apparatus in cases where judgment that the multi-path interference removing apparatus is activated is made by the judgment module.

Furthermore, a method for controlling activation of a multi-path interference removing apparatus of the present invention is a method for controlling activation of a multi-path interference removing apparatus installed in a mobile communication terminal for removing multi-path interference, the method characterized by comprising: a judgment step of judging whether to activate the multi-path interference removing apparatus on the basis of a communication-related control signal; and a control step of activating the multi-path interference removing apparatus in cases where judgment that the multi-path interference removing apparatus is activated is made in the judgment step.

According to the present invention, an increase in the power consumption and the deterioration of the reception characteristic that can arise as a result of installing a multi-path interference removing apparatus can be suppressed.

In the case of the mobile communication terminal of the present invention, the judgment module is configured to judge whether communication has started on the basis of a control signal that is transmitted to and received from a base station; and the control module is preferably configured to activate the multi-path interference removing apparatus in cases where it is judged by the judgment module that communication has started. Furthermore, in the method for controlling activation of the multi-path interference removing apparatus of the present invention, in the judgment step, judgment is made whether communication has started on the basis of a control signal that is transmitted to and received from a base station; and in the control step, the multi-path interference removing apparatus i s activated in cases where judgment that communication has started is made in the judgment step.

In an example of the mobile communication terminal of the present invention, the judgment module is configured to judge whether a base station is applying adaptive modulation and coding technology on the basis of a control signal transmitted by the base station; and the control module is preferably configured to activate the multi-path interference removing apparatus in cases where judgment that the base station is applying the adaptive modulation and coding technology is made by the judgment module. Furthermore, in an example of the method for controlling activation of the multi-path interference removing apparatus of the present invention, in the judgment step, judgment is made whether a base station is applying adaptive modulation and coding technology on the basis of a control signal transmitted by the base station; and in the control step, the multi-path interference removing apparatus is activated in cases where judgment that the base station is applying the adaptive modulation and coding technology is made in the judgment step.

In an example of the mobile communication terminal of the present invention, the judgment module is configured to judge whether the number of effective reception paths is equal to or more than a fixed number on the basis of a control signal transmitted by a base station; and the control module is preferably configured to activate the multi-path interference removing apparatus in cases where judgment that the number of effective reception paths is equal to or more than a fixed number is made by the judgment module. In addition, in an example of the method for controlling activation of the multi-path interference removing apparatus of the present invention, in the judgment step, judgment is made whether the number of effective reception paths is equal to or more than a fixed number on the basis of a control signal transmitted by a base station; and in the control step, the multi-path interference removing apparatus is activated in cases where judgment that the number of effective reception paths is equal to or more than a fixed number is made in the judgment step.

In an example of the mobile communication terminal of the present invention, the judgment module is configured to judge whether the Signal to Interference power Ratio is equal to or more than a fixed value on the basis of the control signal transmitted by a base station; and the control module is preferably configured to activate the multi-path interference removing apparatus in cases where judgment that the Signal to Interference power Ratio is equal to or more than a fixed value is made by the judgment module. Furthermore, in an example of the case of the method for controlling activation of the multi-path interference removing apparatus of the present invention, in the judgment step, judgment is made whether the Signal to Interference power Ratio is equal to or more than a fixed value on the basis of the control signal transmitted by a base station; and in the control step, the multi-path interference removing apparatus is activated in cases where judgment that the Signal to Interference power Ratio is equal to or more than a fixed value is made in the judgment step.

### Effect of the Invention

According to the mobile communication terminal and the method for controlling the startup of the multi-path interference removing apparatus of the present invention, an increase in the power consumption and deterioration of the reception characteristic which can arise as a result of installing a multi-path interference removing apparatus can be suppressed.

### Brief Description of the Drawings

(a) of Fig. 1 is a diagram schematically illustrating a state where
   the mobile communication terminal receives a reception path from the base station; (b) of Fig. 1 is a diagram serving to illustrate a delay profile.
(a) of Fig. 2 is a diagram showing a portion of the delay profile;
(b) of Fig. 2 is a diagram serving to illustrate a channel matrix.
Fig. 3 is a diagram exemplifying the functional constitution of a conventional interference removing apparatus.
Fig. 4 is a diagram exemplifying a reception environment for a case where the mobile communication terminal is within range close to the base station.
Fig. 5 is a diagram exemplifying a reception environment for a case where the mobile communication terminal is within range far from the base station.
Fig. 6 is a diagram serving to illustrate a startup control state of a multi-path interference removing apparatus corresponding with varied bearer communication.
Fig. 7 is a diagram serving to illustrate the startup control state of the multi-path interference removing apparatus in a case where communications using an AMC application cell.
Fig. 8 is a diagram serving to illustrate the startup control state of a multi-path interference removing apparatus that is adapted to the number of reception paths.
Fig. 9 is a diagram serving to illustrate the startup control state of a multi-path interference removing apparatus that is adapted to the speed of motion.
Fig. 10 is a diagram serving to illustrate the startup control of a multi-path interference removing apparatus that is adapted to SIR.
Fig. 11 is a diagram exemplifying the functional constitution of the mobile communication terminal.
Fig. 12 is a flowchart exemplifying the startup control procedure of the multi-path interference removing apparatus of a first embodiment.
Fig. 13 is a flowchart exemplifying the startup control procedure of the multi-path interference removing apparatus of a second embodiment.
Fig. 14 is a flowchart exemplifying the startup control procedure of the multi-path interference removing apparatus of a third embodiment.
Fig. 15 is a diagram representing the relationship between the speed of motion and throughput.
Fig. 16 is a flowchart exemplifying the startup control procedure of the multi-path interference removing apparatus of a fourth embodiment.
Fig. 17 is a diagram representing the relationship between the Signal to Interference power Ratio and the throughput.
Fig. 18 is a flowchart exemplifying the startup control procedure of the multi-path interference removing apparatus of a fifth embodiment.

### Description of Reference Symbols

10 is for mobile communication terminal; 11 is for startup stoppage judgment section; 12 is for startup stoppage control section; 30 is for linear equalizer; 91 is for delay profile creation section; 92 is for channel matrix generation section; 93 is for weighting matrix generation section; 94 is for interference removing section.

### Best Mode for Carrying out the Invention

Embodiments of a method for controlling the startup of a mobile communication terminal and multi-path interference removing apparatus according to the present invention will be described hereinbelow with respect to the drawings. In each of the drawings, the same symbols have been assigned to the same elements to avoid repetition in the description.

Here, the mobile communication terminal of the respective embodiments has a linear equalizer installed as a multi-path interference removing apparatus for removing multi-path interference. This linear equalizer has the same functional constitution as the aforementioned conventional linear equalizer shown in Fig. 3. Therefore, a description of the functional constitution of the linear equalizer will be omitted. The multi-path interference removing apparatus is not limited to the linear equalizer that is adopted in each of the embodiments. As long as the multi-path interference removing apparatus is a device with a multi-path interference removal effect, such a device can be applied in the same way as a linear equalizer.

Furthermore, the mobile communication terminal of each of the embodiments has an HSDPA high-speed wireless communication function installed, for example and implements high-speed wireless communications by increasing the frequency usage efficiency by employing high-rate error correction code, 16QAM (Quadrature Amplitude Modulation), or 64QAM or another multivalued modulation. Relevant mobile communication terminals include, for example, cellular phones, personal handy phones (PHS), and personal digital assistants (PDA) with a communication function.

### [First Embodiment]

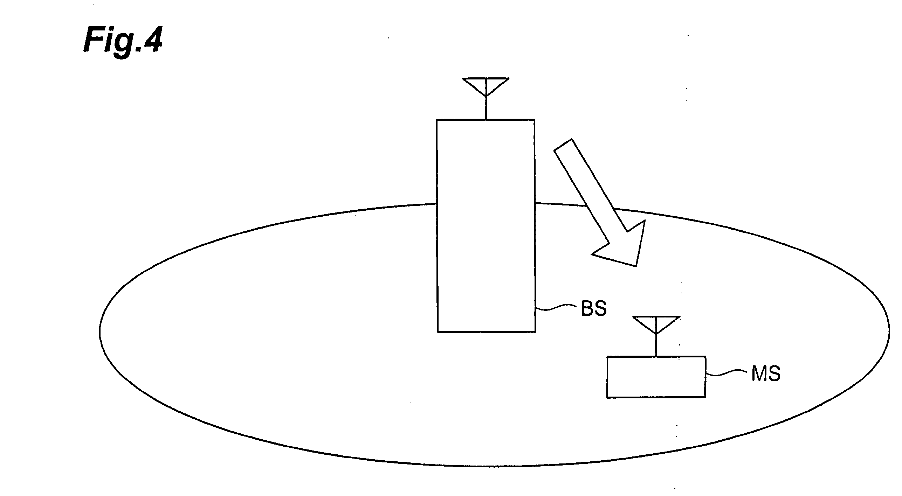

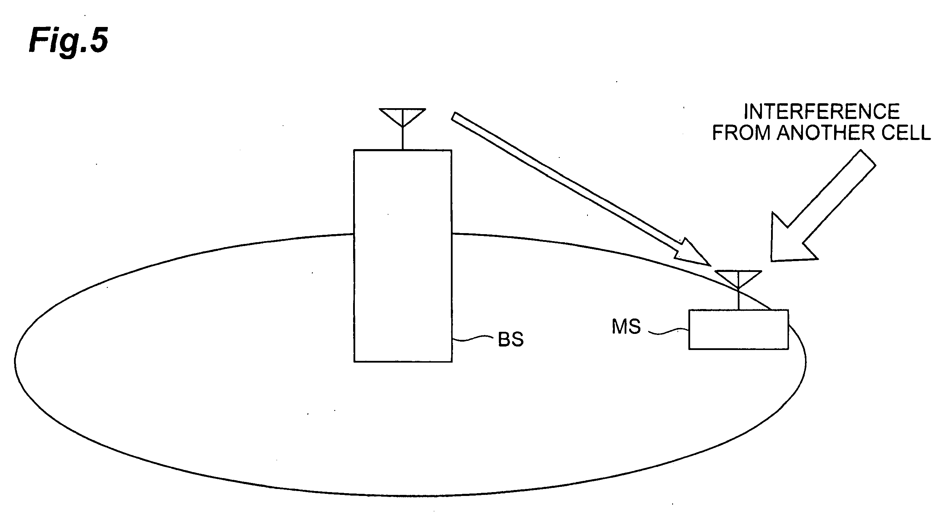

Generally, in the standby state, the mobile communication terminal receives only a control signal that is transmitted by a base station by using a Common Pilot Channel (CPICH), a Synchronization Channel (SCH), a Primary Common Control Physical Channel (P-CCPCH), and a Page Indicator Channel (PICH) indicating the presence or absence of an incoming page. The signals that are transmitted by these channels are transmitted by means of fixed transmission power by means of transmission power control of the base station. Therefore, as shown in Fig. 4, for example, in cases where the mobile communication terminal MS is in the standby state and within range close to the base station BS, the reception power from the base station BS increases and a favorable reception environment is obtained. That is, in this case, because an adequate reception characteristic can be obtained even if the multi-path interference removal is not applied, an improvement in the reception characteristic cannot be expected even when multi-path interference removal is applied. However, as shown in Fig. 5, for example, in cases where the mobile communication terminal MS is in the standby state and within range far from the base station BS, the reception power from the base station BS is small and the interference wave IS from the other base station increases. In other words, in this case, because it is difficult to identify a desired wave from mobile communication terminal MS locating within a range, an improvement in the reception characteristic cannot be expected even when multi-path interference removal is applied.

Therefore, according to the first embodiment, suppose that, when the mobile communication terminal is in the standby state, multi-path interference removal is not performed and that multi-path interference removal is performed only in cases where the mobile communication terminal is in a state of communicating. To describe this in specific terms, in cases where the current communication active state of the mobile communication terminal is any of a voice communication active state, a TV phone communication active state, a packet communication active state, or a state of communication with another fixed terminal, for example, it is judged that the mobile communication terminal is not in a standby state and multi-path interference removal is performed.

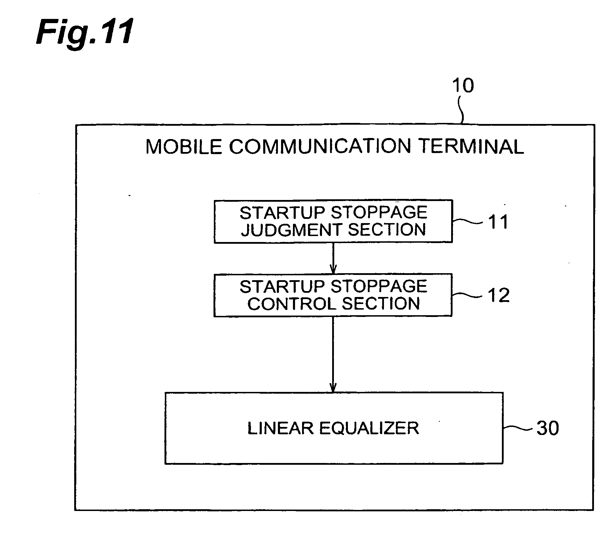

Fig. 11 exemplifies the functional constitution of the mobile communication terminal of the first embodiment. As shown in Fig. 11, a mobile communication terminal 10 comprises a startup stoppage judgment section 11 (judgment module) and a startup stoppage control section 12 (control module). Furthermore, the mobile communication terminal 10 contains a linear equalizer 30.

The startup stoppage judgment section 11 judges the start or end of communications based on control signals that are sent to or received from the base station. To describe this in specific terms, the startup stoppage judgment section 11 judges that communication has started when a preamble is transmitted from the mobile communication terminal to the base station, for example. Furthermore, the startup stoppage judgment section 11 judges that communication has ended when a control signal indicating the end of communication transmitted by the base station using the Common Pilot Channel, Synchronization Channel and Primary Common Control Physical Channel or Page Indicator Channel is received, for example. Relevant forms of communication include, for example, voice communication, TV phone communication, packet communication, or communication with another fixed terminal.

The startup stoppage control section 12 puts the linear equalizer 30 in a startup state in cases where it is judged by the startup stoppage judgment section 11 that communication has started. Accordingly, when the mobile communication terminal 10 shifts from a standby state to a communication active state, multi-path interference removal processing can be started.

Furthermore, in cases where it is judged by the startup stoppage judgment section 11 that communication has ended, the startup stoppage control section 12 sets the linear equalizer 30 in a stoppage state depending on the type of communication. To describe this in specific terms, in cases where the types of communication are voice communication, TV phone communication or communication with another fixed terminal, when the respective communication ends, the linear equalizer 30 is put in a stoppage state and, in cases where the type of communication is packet communication, the linear equalizer 30 is put in a stoppage state when the reception of packets is complete. Accordingly, when the mobile communication terminal shifts from a communication active state to a standby state, multi-path interference removal processing can be terminated.

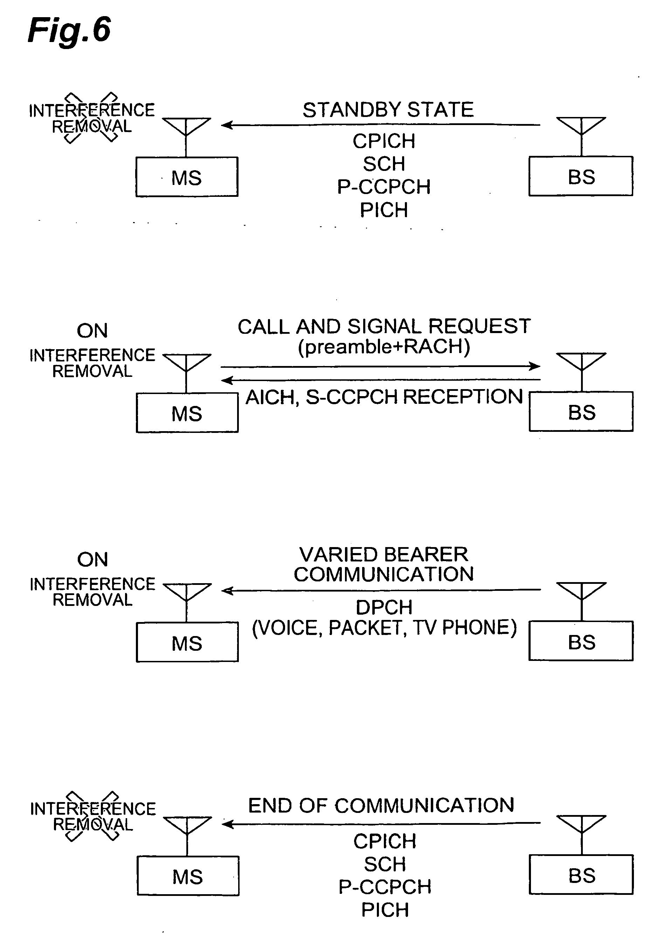

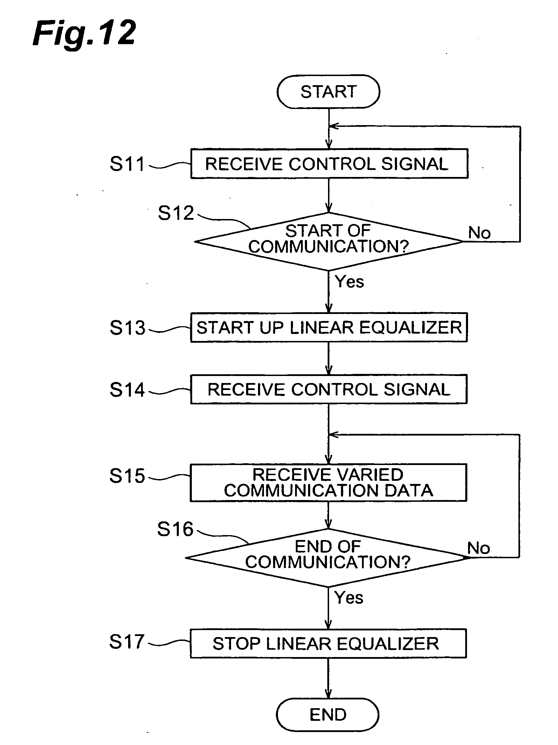

The operation of the mobile communication terminal 10 of the first embodiment will be described next with reference to Figs. 6 and 12.

First, when the mobile communication terminal 10 is in the standby state, the mobile communication terminal 10 receives a control signal transmitted by the base station by using a Common Pilot Channel (CPICH), a Synchronization Channel (SCH), a Primary Common Control Physical Channel (P-CCPCH), and a Page Indicator Channel (PICH) (step S11).

Thereafter, the startup stoppage judgment section 11 of the mobile communication terminal 10 judges whether communication has started (step S12). The startup stoppage judgment section 11 repeats the processing of step S12 while in the standby state (step S12; NO).

Thereafter, in order to perform a call or signal request, the mobile communication terminal 10 transmits a preamble to the base station and then transmits a signal using a Random Access Channel (RACH). Here, the signal that is transmitted by the Random Access Channel (RACH) includes information for identifying the type of communication requested by the mobile communication terminal 10 (voice communication, TV phone communication, packet communication, or communication with another fixed terminal).

The startup stoppage judgment section 11 of the mobile communication terminal 10 judges that the communication has started when a preamble is transmitted (step S12; YES). Accordingly, the startup stoppage control section 12 puts the linear equalizer 30 in a startup state (step S13).

Thereafter, the mobile communication terminal 10 receives a control signal that is transmitted by the base station using an Acquisition Indicator Channel (AICH) and a Secondary Common Control Channel (S-CCPCH) (step S14).

Thereafter, the mobile communication terminal 10 receives various communication data obtained during various communication which are transmitted by the base station using a Dedicated Physical Channel (DPCH) while performing multi-path interference removal processing (step S 15).

Thereafter, the startup stoppage judgment section 11 of the mobile communication terminal 10 judges whether communication has ended (step S16). The startup stoppage judgment section 11 repeats the processing of step S16 while communication is performed (step S16; NO).

Subsequently, a control signal indicating the end of communication is received from the base station using the Common Pilot Channel, Synchronization Channel, Primary Common Control Physical Channel or paging indicator channel.

The startup stoppage judgment section 11 of the mobile communication terminal 10 judges that communication has ended when a control signal indicating the end of communication is received (step S16; YES). Accordingly, the startup stoppage control section 12 puts the linear equalizer 30 in a stoppage state (step S 17).

As mentioned earlier, the mobile communication terminal of the first embodiment allows a linear equalizer to be put into a startup state only during communication. Therefore, while the linear equalizer is in a standby state in which an improvement in the reception characteristic afforded by the multi-path interference removal method can hardly be expected, the linear equalizer can be put into a stoppage state. Furthermore, the power consumption can also be reduced by stopping the linear equalizer.

### [Second Embodiment]

In the transmission power control technology which is used in conventional W-CDMA (Wideband Code Division Multiple Access), the transmission power of the base station is controlled so that the reception quality of the mobile communication terminal is always fixed. Therefore, in the case of the mobile communication terminal for which W-CDMA technology is adopted, even when there is the intention of improving the Signal to Interference power Ratio (SIR) by installing a linear equalizer, not only is it possible to improve the throughput of the mobile communication terminal but rather the power consumption also increases.

On the other hand, in the case of a transmission system with an HSDPA high-speed wireless communication function, Adaptive Modulation and Coding (AMC) technology is adopted in accordance with the reception environment of the mobile communication terminal. With this Adaptive Modulation and Coding technology, the transmission power of the base station is always kept constant. Furthermore, because the TBS (Transport Block Size) is determined in accordance with the reception quality of the mobile communication terminal, higher-speed packet communications are possible by installing a multi-path interference removing apparatus to improve the reception SIR. In other words, in cases where the Adaptive Modulation and Coding technology is adopted, the throughput of the mobile communication terminal can be improved by applying the multi-path interference removal method. The Adaptive Modulation and Coding technology is distinguished by its application or non-application to base stations or cell units.

Therefore, according to the second embodiment, suppose that it is discriminated whether the base station is applying Adaptive Modulation and Coding technology and that the multi-path interference removal method is performed only in cases where a connection is made to the base station (including cells) to which the Adaptive Modulation and Coding technology is applied.

The functional constitution of the mobile communication terminal of the second embodiment is the same as the functional constitution of the mobile communication terminal of the first embodiment. That is, as shown in Fig. 11, the mobile communication terminal 10 comprises a startup stoppage judgment section 11 (judgment module) and the startup stoppage control section 12 (control module). Furthermore, the linear equalizer 30 is installed in the mobile communication terminal 10.

The startup stoppage judgment section 11 judges whether the Adaptive Modulation and Coding technology is applied by the base station on the basis of the control signal transmitted by the base station during the start of communication. A relevant control signal that is transmitted by the base station during the start of communication is, for example, an RRC (Radio Resource Control) message (Radio bearer setup) which is transmitted via the Secondary Common Control Channel (S-CCPCH). Furthermore, the startup stoppage judgment section 11 judges the end of communication based on control signals that are transmitted to and received from the base station.

The startup stoppage control section 12 puts the linear equalizer 30 in a startup state in cases where it is judged by the startup stoppage judgment section 11 that the Adaptive Modulation and Coding technology is applied by the base station. As a result, the mobile communication terminal 10 is able to start the multi-path interference removal processing when a shift to a base station that applies the Adaptive Modulation and Coding technology is made.

Furthermore, in cases where it is judged by the startup stoppage judgment section 11 that communication has ended, the startup stoppage control section 12 sets the linear equalizer 30 in a stoppage state. Accordingly, when the mobile communication terminal is not within range of a base station to which the Adaptive Modulation and Coding technology is applied, the multi-path interference removal processing can be stopped.

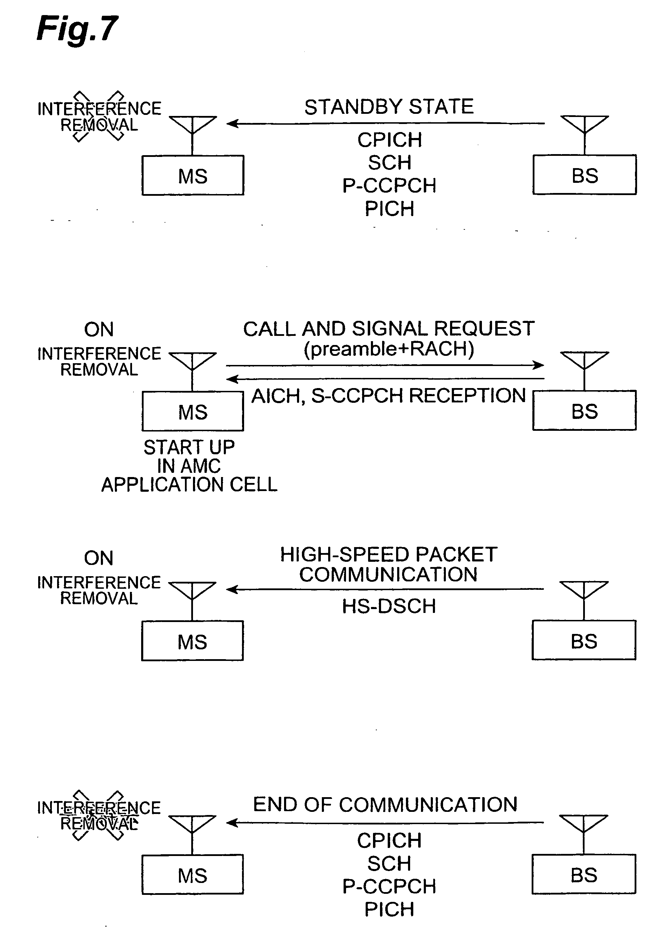

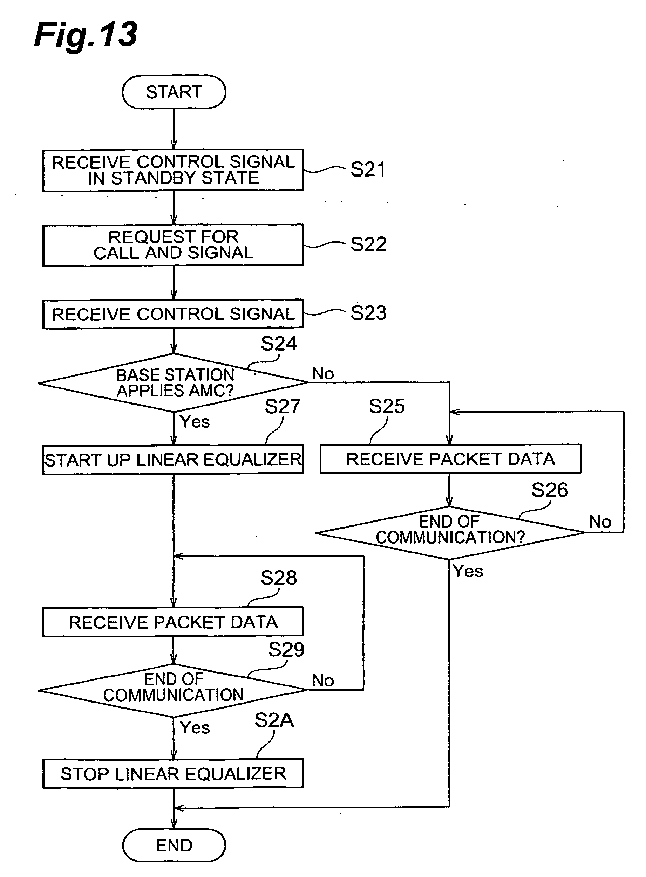

The operation of the mobile communication terminal 10 of the second embodiment will be described next with reference to Figs.7 and 13.

First, in cases where the mobile communication terminal 10 is in the standby state, a control signal that is transmitted by a base station 20 using the Common Pilot Channel (CPICH), the Synchronization Channel (SCH), the Primary Common Control Physical Channel (P-CCPCH), and the Page Indicator Channel (PICH) is received (step S21).

Thereafter, in order to make a call or signal request, the mobile communication terminal 10 transmits a preamble to the base station and then transmits a signal using a Random Access Channel (RACH) (step S22).

Thereafter, the mobile communication terminal 10 receives a control signal that is transmitted by the base station 20 using the Acquisition Indicator Channel (AICH) and Secondary Common Control Channel (S-CCPCH) (step S23).

The startup stoppage judgment section 11 of the mobile communication terminal 10 then judges whether the connection-destination base station is a base station to which the Adaptive Modulation and Coding technology is applied on the basis of the control signal received via the Secondary Common Control Channel (S-CCPCH) (step S24). In cases where the judgment is NO (step S24; NO), the mobile communication terminal 10 starts communicating with the linear equalizer 30 still stopped and receives packet data (step S25). Thereafter, when a control signal indicating the end of communication is received from the base station (step S26; YES), packet communication is ended.

However, in cases where the judgment in step S24 is YES (step S24; YES), the startup stoppage control section 12 sets the linear equalizer 30 in the startup state (step S27).

Thereafter, the mobile communication terminal 10 receives packet data which are transmitted by the base station using a High Speed Downlink Shared Channel (HS-DSCH) while performing multi-path interference removal processing (step S28).

The startup stoppage judgment section 11 of the mobile communication terminal 10 then judges whether communication has ended (step S29). The startup stoppage judgment section 11 repeats the processing of step S28 while high-speed packet communication is being performed (step S29; NO).

Thereafter, a control signal indicating the end of communication is received from the base station using the Common Pilot Channel, the Synchronization Channel, the primary common control channel and the paging indicator channel.

The stoppage judgment section 13 of the mobile communication terminal 10 judges that communication has ended when receiving a control signal indicating the end of communication (step S29; YES). Accordingly, the startup stoppage control section 12 sets the linear equalizer 30 in the stoppage state (step S2A).

As mentioned hereinabove, the mobile communication terminal of the second embodiment is capable of setting the linear equalizer in the startup state only during high-speed packet communication to which the Adaptive Modulation and Coding technology is applied. Hence, during communication, to which transmission power control technology with which an improvement in the reception characteristic afforded by the multi-path interference removal method can hardly be expected is applied, or while in the standby state, the linear equalizer can be set in a stoppage state. The power consumption can also be reduced by stopping the linear equalizer.

### [Third Embodiment]

Generally, the linear equalizer 30 is a device for removing the multi-path interference. Hence, not only is there no particular benefit to be derived from applying the multi-path interference removal method in cases where a multi-path does not exist or in cases where a multi-path exists and the reception power is extremely small, the weighting matrix for removing the multi-path interference is multiplied by the signal by applying the multi-path interference removal method which creates further deterioration of the communication environment.

Therefore, in the case of the third embodiment, suppose that the number of reception paths is measured and the multi-path interference removal method is executed only in cases where the number of effective reception paths is equal to or more than a fixed number. Here, an effective reception path refers to a reception path for which the power difference with respect to the reception power of the desired wave is less than 10 dB, for example. Furthermore, although a case where the aforementioned fixed number is two paths is described hereinbelow in this embodiment, this does not means that the fixed number is limited to two paths. Furthermore, although a case where the reception path with the highest reception power is the desired wave is described hereinbelow in this embodiment, the desired wave is not limited to such a reception path. The reception path with the earliest arrival time may also be the desired wave, for example.

The functional constitution of the mobile communication terminal of the third embodiment is the same as the functional constitution of the mobile communication terminal of the first embodiment. In other words, as shown in Fig. 11, the mobile communication terminal 10 comprises a startup stoppage judgment section 11 (judgment module) and startup stoppage control section 12 (control module). The linear equalizer 30 is also installed in the mobile communication terminal 10.

The startup stoppage judgment section 11 measures the reception power of each reception path on the basis of the delay profile created using the signal received via the Common Pilot Channel (CPICH) and judges whether a reception path for which the power difference with respect to the reception power of the desired wave is less than 10dB exists. To describe this in specific terms, the startup stoppage judgment section 11 generally compares the reception power of the desired wave for which the reception power is maximum and the reception power of the other reception path (delay wave) and, in cases where the power difference is not less than 10dB, removes the reception path from the target of the reception path. Furthermore, the delay profile is created by the delay profile creation section of the linear equalizer.

In cases where it is judged by the startup stoppage judgment section 11 that a reception path for which the power difference with respect to the reception power of the desired wave is less than 10dB exists, the startup stoppage control section 12 sets the linear equalizer 30 in the startup state. In other words, in cases where the number of effective reception paths is two or more paths including the desired wave, the startup stoppage control section 12 sets the linear equalizer 30 in a startup state. Accordingly, only when a reception path for which multi-path interference is the primary cause exists is it possible to execute multi-path interference removal processing.

Furthermore, in cases where it is judged by the startup stoppage judgment section 11 that a reception path for which the power difference with respect to the reception power of the desired wave is less than 10dB does not exist, the startup stoppage control section 12 sets the linear equalizer 30 in the stoppage state. In other words, in cases where the number of effective reception paths is only the one path of the desired wave, the startup stoppage control section 12 sets the linear equalizer 30 in the stoppage state. Accordingly, in cases where a reception path for which the multi-path interference is the primary cause does not exist, the multi-path interface removal processing can be stopped.

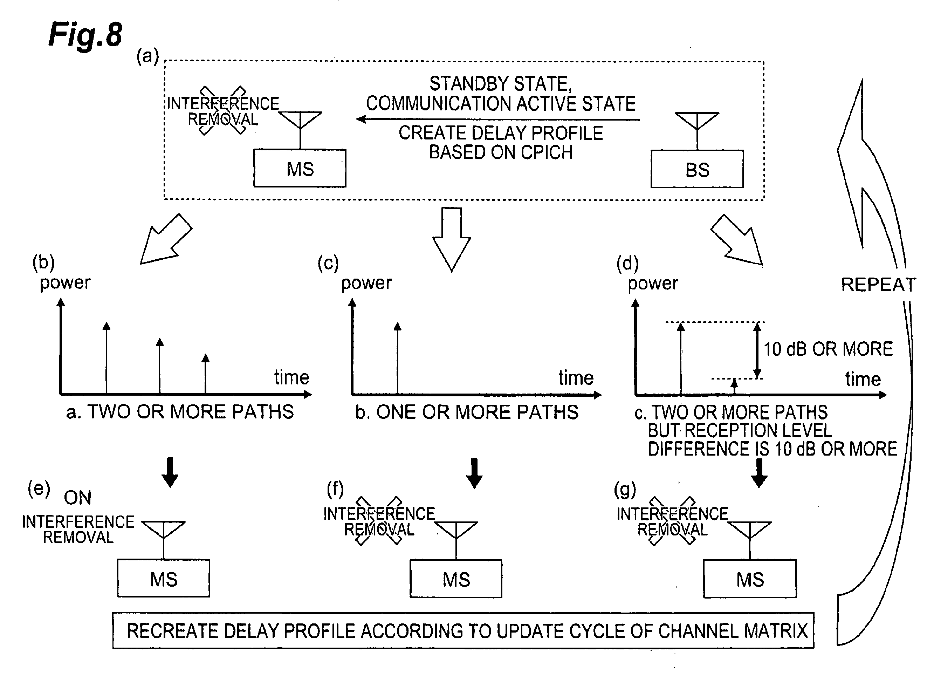

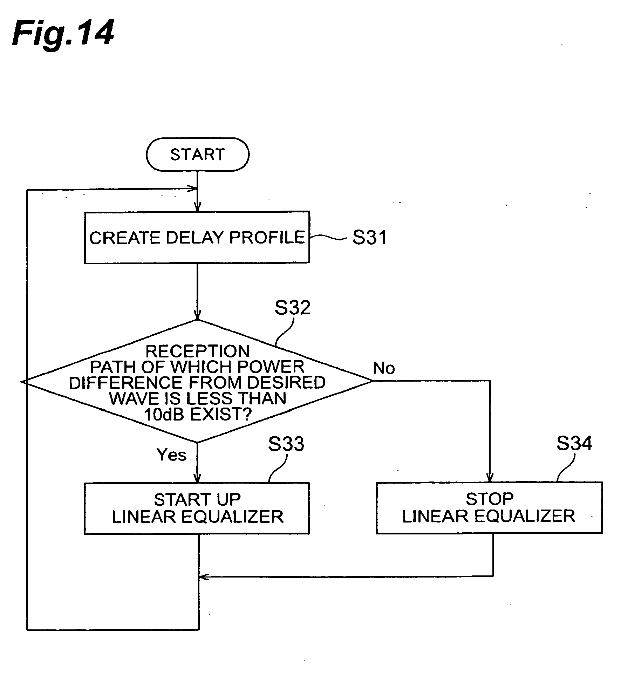

Thereafter, the operation of the mobile communication terminal 10 of the third embodiment will be described with respect to Figs. 8 and 14.

First, the mobile communication terminal 10 creates a delay profile on the basis of a control signal that is transmitted by the base station using the Common Pilot Channel (CPICH) irrespective of whether the mobile communication terminal 10 is in the standby state or a communication active state (step S31).

Thereafter, the startup stoppage judgment section 11 of the mobile communication terminal 10 judges whether a reception path for which the power difference with respect to the reception power of the desired wave is less than 10dB exists on the basis of the reception power of the respective reception paths measured on the basis of the delay profile (step S32). In cases where this judgment is YES (step S32; YES), the startup stoppage control section 12 of the mobile communication terminal 10 sets the linear equalizer 3 0 in a startup state (step S33).

On the other hand, in cases where the judgment of step S32 is NO (step S32; NO), the startup stoppage control section 12 of the mobile communication terminal 10 sets the linear equalizer 30 in a stoppage state (step S34).

Furthermore, the aforementioned delay profile is created repeatedly in accordance with the update cycle for the channel matrix. Therefore, the respective processing of steps S31 to S34 is executed repeatedly in accordance with the update cycle for the channel matrix.

As described hereinabove, the mobile communication terminal of the third embodiment is able to set the linear equalizer in the startup state only in cases where a reception path for which multi-path interference is the primary cause exists. Therefore, the linear equalizer can be set in a stoppage state only in cases where a multi-path does not exist and cases where a multi-path exists and the reception power is extremely small. Accordingly, deterioration of the reception characteristic can be suppressed. The power consumption can also be reduced by stopping the linear equalizer.

Furthermore, according to the third embodiment, although a reception path for which the power difference is 10dB or more is removed from the count for the number of reception paths, the reception paths removed from the count for the number of reception paths is not limited to the reception paths for which the power difference is 10dB or more. The threshold value of the power difference can be optionally set. Furthermore, the total number of reception paths contained in the delay profile may be counted. That is, the startup stoppage judgment section 11 may measure the reception power of the respective reception paths on the basis of the delay profile and judge whether the number of existing reception paths is equal to or more than a fixed number. Accordingly, the linear equalizer can be set in a startup state only in cases where a plurality of reception paths exist and the linear equalizer can be set in a stoppage state in cases where a multi-path does not exist.

### [Fourth Embodiment]

Generally, in cases where a mobile communication terminal is moving at high speed, because the channel estimation accuracy for generating a channel matrix deteriorates, a situation arises where the multi-path interference removal result is not obtained.

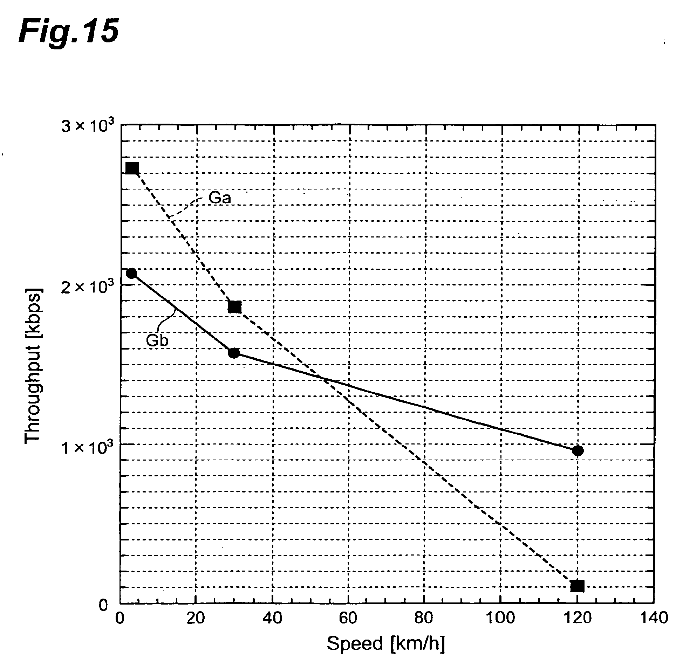

Here, the relationship between the speed of motion and the throughput will be described with reference to Fig. 15. The graphs shown in Fig. 15 are graph Ga for a case where a linear equalizer is installed in the mobile communication terminal and graph Gb for a case where a linear equalizer is not installed, where the horizontal axis represents the speed of motion and the vertical axis represents the throughput. As can also be seen from these graphs, the throughput decreases as the speed of motion increases irrespective of whether the linear equalizer is installed. Furthermore, the respective values of the throughputs yielded when a linear equalizer is installed and when a linear equalizer is not installed reverse while the speed of motion is 50 km/h to 60 km/h. In other words, in a range where the speed of motion is slower than 50 km/h to 60 km/h, a mobile communication terminal with a linear equalizer installed therein transitions with a high throughput, while, in a range where the speed of motion is faster than 50 km/h to 60 km/h, a mobile communication terminal without a linear equalizer installed transitions with a high throughput.

Therefore, in the case of the fourth embodiment, suppose that the speed of motion of the mobile communication terminal is measured and the multi-path interference removal method is performed only in cases where the speed of motion is equal to or less than 60km/h, for example. Furthermore, although the multi-path interference removal method is performed in cases where the speed of motion is equal to or less than 60km/h in this embodiment, the speed of motion when the multi-path interference removal method is activated is not limited to a speed equal to or less than 60km/h. The threshold value can be optionally set.

The functional constitution of the mobile communication terminal of the fourth embodiment is the same as the functional constitution of the mobile communication terminal of the first embodiment. That is, as shown in Fig. 11, the mobile communication terminal 10 comprises a startup stoppage judgment section 11 (judgment module) and a startup stoppage control section 12 (control module). Furthermore, a linear equalizer 30 is installed in the mobile communication terminal 10.

The startup stoppage judgment section 11 detects the speed of motion of the mobile communication terminal on the basis of a control signal received via the Common Pilot Channel (CPICH) and judges whether the speed of motion is equal to or less than 60 km/h.

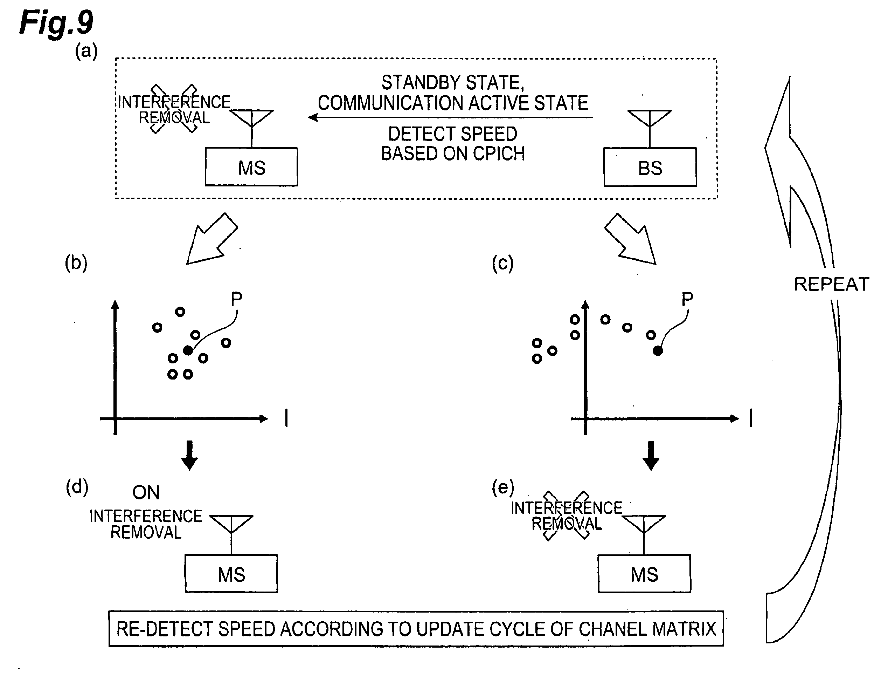

Here, the speed of motion of the mobile communication terminal can be detected as follows. First, a pilot signal is obtained by despreading a control signal that is received via a Common Pilot Channel (CPICH). The pilot signal is then plotted on the phase plane shown in (b) of Fig. 9. Thereafter, the dispersed values for the pilot signal plotted on the phase plane are calculated and the speed of motion is detected by determining the speeds of motion corresponding with the dispersed values.

As shown in (b) and (c) of Fig. 9, there is an aggregation of dispersed values at a certain single point P if the pilot signal is subjected to the effects of noise and phasing and so forth. However, because phasing occurs in cases where the reception point moves in the same way as the mobile communication terminal, the pilot signal is dispersed on the phase plane. Furthermore, due to the effect of the Doppler shift frequency, the higher the speed of motion, the larger the dispersed values of the signal. Therefore, the speed of motion can be detected by calculating the dispersed values of the pilot signal that is actually obtained by taking the signal point P for an ideal pilot signal as a reference. Furthermore, (b) of Fig. 9 shows the dispersed state of the pilot signal for a case where the speed of motion is relatively slow and (c) of Fig. 9 shows the dispersed state of the pilot signal for a case where the speed of motion is relatively fast.

The startup stoppage control section 12 sets the linear equalizer 30 in a startup state in cases where it is judged by the startup stoppage judgment section 11 that the speed of motion of the mobile communication terminal is 60 km/h or less. Accordingly, the multi-path interference removal processing can be executed only in cases where an improvement in the throughput as a result of multi-path interference removal processing can be expected.

Furthermore, the startup stoppage control section 12 sets the linear equalizer 30 in a stoppage state in cases where it is judged by the startup stoppage judgment section 11 that the speed of motion of the mobile communication terminal is greater than 60 km/h. Accordingly, the multi-path interference removal processing can be stopped only in cases where an improvement in the throughput as a result of multi-path interference removal processing cannot be expected.

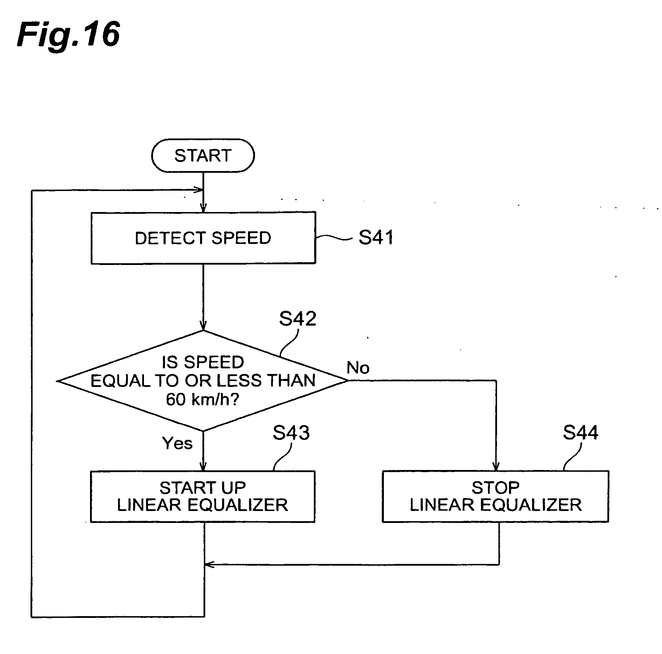

The operation of the mobile communication terminal 10 of the fourth embodiment will be described next with reference to Figs. 9 and 16.

First, the mobile communication terminal 10 detects the speed of motion of the mobile communication terminal 10 on the basis of a control signal that is transmitted by the base station using a Common Pilot Channel (CPICH) in a case where the mobile communication terminal 10 is in a communication active state (step S41).

Thereafter, the startup stoppage judgment section 11 of the mobile communication terminal 10 judges whether the speed of motion of the mobile communication terminal 10 is not more than 60 km/h on the basis of the detected speed of motion (step S42). In a case where the judgment is YES (step S42; YES), the startup stoppage control section 12 of the mobile communication terminal 10 sets the linear equalizer 30 in a startup state (step S43). However, in cases where the speed of motion of the mobile communication terminal 10 is judged to be greater than 60 km/h in step S42 (step S42; NO), the startup stoppage control section 12 sets the linear equalizer 30 in a stoppage state (step S44).

Furthermore, the detection of the speed of motion is repeatedly performed in accordance with the update cycle of the channel matrix. Therefore, the respective processing from steps S41 to S44 is performed repeatedly in accordance with the update cycle of the channel matrix.

As mentioned earlier, the mobile communication terminal of the fourth embodiment is able to set the linear equalizer in a startup state only in cases where the mobile communication terminal 10 is moving at a low speed. Therefore, the linear equalizer can be set in a stoppage state in cases where the mobile communication terminal 10 is moving a high speed. Accordingly, the deterioration of the reception characteristic can be suppressed. In addition, the power consumption can be reduced by stopping the linear equalizer.

### [Fifth Embodiment]

In cases where the mobile communication terminal is within range in a location a distance away from the base station and so forth, the interference wave from another base station is sometimes larger than the desired wave from the base station that is within range. In such cases, because the channel estimation accuracy for generating a channel matrix deteriorates, a situation arises where the multi-path interference removal effect is not obtained.

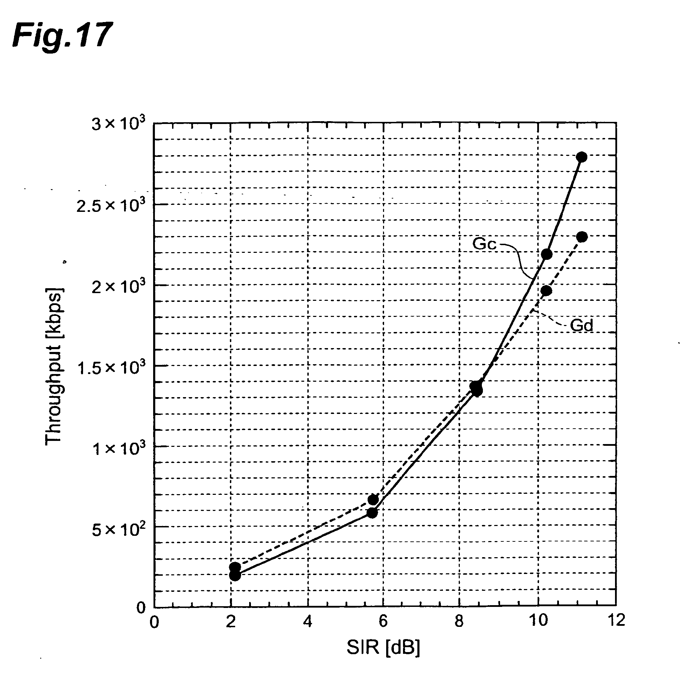

Here, the relationship between the Signal to Interference power Ratio (SIR) and the throughput will be described with reference to Fig. 17. The graphs in Fig. 17 are graph Gc for a case where a linear equalizer is installed in the mobile communication terminal and a graph Gd for a case where a linear equalizer is not installed, where the horizontal axis represents the SIR and the vertical axis represents the throughput. As can also be seen from these graphs, when the SIR rises, the throughput increases irrespective of whether the linear equalizer is installed. Furthermore, the respective values of the throughputs yielded when a linear equalizer is installed and when a linear equalizer is not installed are inverted while the SIR is 8dB to 9dB. In other words, in a range where the SIR is lower than 8dB to 9dB, a mobile communication terminal with a linear equalizer installed therein transitions with a high throughput, while, in a range where the SIR is higher than 8dB to 9dB, a mobile communication terminal without a linear equalizer installed transitions with a high throughput.

Therefore, in the case of the fifth embodiment, suppose that the SIR of the mobile communication terminal is measured and the multi-path interference removal method is performed only in cases where the SIR is equal to or less than 8dB, for example. Furthermore, although it is assumed in this embodiment that the multi-path interference removal method is performed in cases where the SIR is equal to or more than 8dB, the SIR when the multi-path interference removal method is activated is not limited to an SIR equal to or more than 8dB. The threshold value of the SIR can be optionally set.

The functional constitution of the mobile communication terminal of the fifth embodiment is the same as the functional constitution of the mobile communication terminal of the second embodiment. That is, as shown in Fig. 11, the mobile communication terminal 10 comprises a startup stoppage judgment section 11 (judgment module) and a startup stoppage control section 12 (control module). Furthermore, a linear equalizer 30 is installed in the mobile communication terminal 10.

The startup stoppage judgment section 11 measures the SIR on the basis of a delay profile that is created using a control signal that is received via the Common Pilot Channel (CPICH) and judges whether the SIR is equal to or more than 8dB.

Here, the SIR of the mobile communication terminal can be measured as follows. First, a delay profile is generated by despreading a control signal that is received via a Common Pilot Channel (CPICH). The desired wave signal power (S) is calculated by totaling the reception power of the respective reception paths on the basis of the delay profile. Subsequently, a pilot signal, which is obtained by despreading a control signal that is received via a Common Pilot Channel (CPICH) is sequentially plotted on the phase plane shown in (b) of Fig. 9, for example. Thereafter, an interference component (I) is determined by calculating the dispersed values for the pilot signal plotted on the phase plane. SIR is then determined on the basis of desired wave signal power (S) thus obtained and the interference component (I).

In cases where it is judged by the startup stoppage judgment section 11 that the SIR of the mobile communication terminal is equal to or more than 8dB, the startup stoppage control section 12 sets the linear equalizer 30 in a startup state. Accordingly, multi-path interference removal processing can be executed only in cases where an improvement in the throughput can be expected through multi-path interference removal processing.

Furthermore, in cases where it is judged by the startup stoppage judgment section 11 that the SIR of the mobile communication terminal is less than 8dB, the startup stoppage control section 12 sets the linear equalizer 30 in a stoppage state. Accordingly, the multi-path interference removal processing can be stopped in cases where an improvement in the throughput through multi-path interference removal processing cannot be expected.

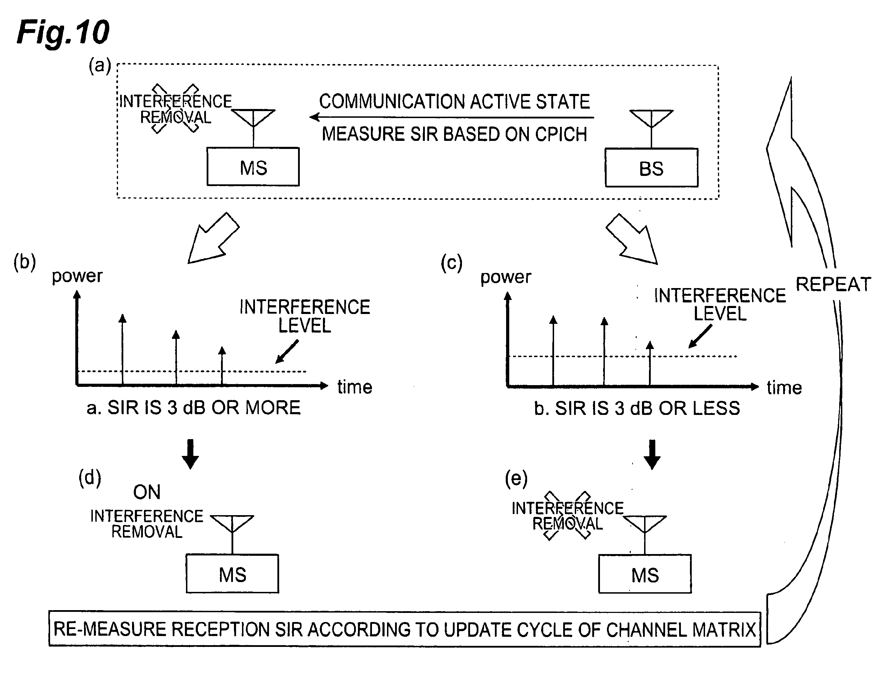

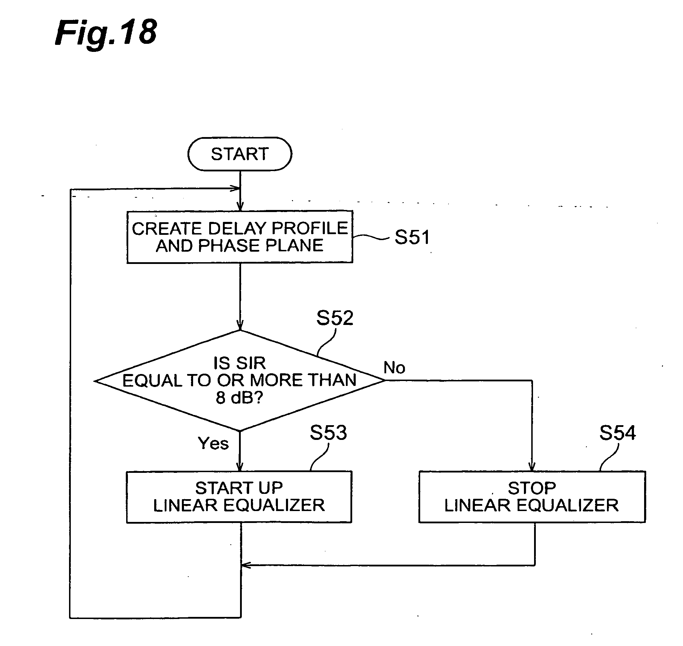

Thereafter, the operation of the mobile communication terminal 10 of the fifth embodiment will be described with reference to Figs. 10 and 18.

First, in cases where the mobile communication terminal 10 is in a communication active state, a delay profile and phase plane are created on the basis of a control signal that is transmitted by the base station 20 by using a Common Pilot Channel (CPICH) (step S51).

Thereafter, the startup stoppage judgment section 11 of the mobile communication terminal 10 judges whether the SIR measured on the basis of the delay profile and phase plane thus created is equal to or more than 8dB (step S52). In cases where the judgment is YES (step S52; YES), the mobile communication terminal 10 sets the linear equalizer 30 in a startup state (step S53). However, in cases where it is judged in step S52 that the SIR is less than 8dB (step S52; NO), the linear equalizer 30 is set in a stoppage state (step S54).

Furthermore, the measurement of the SIR is detected repeatedly in accordance with the update cycle of the channel matrix. Therefore, the respective processing from step S51 to S54 is performed repeatedly in accordance with the update cycle of the channel matrix.

As described hereinabove, the mobile communication terminal of the fifth embodiment is able to set the linear equalizer in a startup state only in cases where the SIR of the mobile communication terminal 10 is high. Therefore, in cases where the interference from another base station is large, the linear equalizer can be set in a stoppage state. Accordingly, deterioration in the reception characteristic can be suppressed. The power consumption can also be reduced by stopping the linear equalizer.

Finally, the startup control method of the multi-path interference removing apparatus of the present invention is a startup control method of a multi-path interference removing apparatus that adaptively controls the startup of the multi-path interference removing apparatus in accordance with the communication active state and reception environment of the mobile communication terminal and possesses the following characteristics. The first characteristic is that of performing an operation only during voice communication for the startup control of the multi-path interference removing apparatus of the reception terminal. Furthermore, the second characteristic is that of performing an operation only during TV phone communication for the startup control of the multi-path interference removing apparatus of the reception terminal. In addition, the third characteristic is that of performing an operation only during packet communication of a W-CDMA system for the startup control of the multi-path interference removing apparatus of the reception terminal. In addition, the fourth characteristic is that of performing an operation only during a PC connection for the startup control of the multi-path interference removing apparatus of the reception terminal. Furthermore, the fifth characteristic is that of performing startup only during communication in cells to which the Adaptive Modulation and Coding technology (AMC) is applied for the startup control of the multi-path interference removing apparatus of the reception terminal. Moreover, the sixth characteristic is that of operating only in cases where the number of reception paths for the terminal is at least two for the startup control of the multi-path interference removing apparatus of the reception terminal. In addition, the seventh characteristic is that of operating only in cases where the speed of motion of the terminal is equal to or less than 30 km/h for the startup control of the multi-path interference removing apparatus of the reception terminal. Furthermore, the eighth characteristic is that of operating only in cases where the Signal to Interference power Ratio (SIR) during non-application of the removing apparatus is at least 3 dB for the startup control of the multi-path interference removing apparatus of the reception terminal.

Here, embodiments for the mobile communication terminal and multi-path interference removal method that possess the first to eight characteristics above will be described hereinbelow.

First, a procedure according to which the multi-path interference removal method is stopped in the standby state and the multi-path interference removal method is started up only during communication will be described (See Fig. 5). (1) The interference removing apparatus is not started up while the terminal is in the standby state (a state where no signal is emitted by the terminal). (2) The mobile communication terminal issues a call or signal request by sequentially transmitting a preamble (a pre-arranged signal prior to the Random Access Channel transmission) and the Random Access Channel (RACH) to the base station. With the timing at which this preamble is transmitted, the mobile communication terminal starts up the multi-path interference removing apparatus. By performing such control, the multi-path interference removing apparatus can be started up only in the case of a communication active state. (3) Because various data such as voice, a TV phone, or packets are transmitted by the base station on individual channels (DPCH), the mobile communication terminal receives these data while the multi-path interference removing apparatus remains activated. (4) When communication ends in the case of voice or a TV phone, the multi-path interference removal method is stopped after the receipt of packets has ended in the event of packet communication. By following this procedure, it is possible to start up the multi-path interference removing apparatus only during communication and it is possible to limit startup during a standby state with a minimal multi-path interference removal effect. Furthermore, because it is possible to limit startup of the multi-path interference removing apparatus during standby, the power consumption of the mobile communication terminal can be reduced.

A procedure in which AMC technology application cells and non-application cells are distinguished and the multi-path interference removing apparatus is stopped in a non-application cell will be described next (See Fig. 7). (1) The interference removing apparatus is not started while the terminal is in a standby state (state in which signals are not issued by the terminal). (2) The mobile communication terminal performs a call or signal request by sequentially transmitting a preamble and Random Access Channel to the base station. (3) The mobile communication terminal discriminates whether the base station constituting the connection destination is in an AMC application cell or non-application cell on the basis of an RRC message (Radio bearer set up) that is received from the base station. The multi-path interference removing apparatus is started up only in cases where the base station is in an AMC application cell. (4) Because packet data are transmitted by the base station to the high-speed common channel (HS-DSCH), the mobile communication terminal receives packet data with the multi-path interference removing apparatus still activated. (5) The multi-path interference removing apparatus is stopped following completion of high-speed packet communication. As a result of such a procedure, the multi-path interference removing apparatus can be started up only during high-speed packet communication to which AMC is applied. Furthermore, the multi-path interference removing apparatus can be stopped during voice or packet communication which uses transmission power control with a minimal multi-path interference removal effect or standby.

A procedure in which the multi-path interference removing apparatus is stopped will be described next in cases where a multi-path exists (See Fig. 8). (1) The mobile communication terminal creates a delay profile from the CPICH irrespective of whether the mobile communication terminal is in a standby state or a communication active state. (2) The number of reception paths is measured by the delay profile. Here, reception paths for which the reception power difference with respect to the reception path with the highest reception level is not less than 10 dB are not identified as reception paths. (3) In cases where two or more reception paths exist, the multi-path interference removing apparatus is started up and, in cases where only one path exists, the multi-path interference removing apparatus is stopped. (4) The delay profile is re-created in accordance with the update cycle for the channel matrix. (5) The processing returns to procedure (1). By following this procedure, the deterioration in the reception characteristic which is produced in cases where the multi-path interference removing apparatus is applied in one path environment can be suppressed.

The procedure in which the multi-path interference removing apparatus is stopped during high-speed motion will be described next (See Fig. 9). (1) The mobile communication terminal detects the speed of the mobile communication terminal from the CPICH in cases where the mobile communication terminal is in a communication active state. Generally, the despreaded pilot signal consolidates at a single point (black dot shown in Fig. 9) as long as same is not subjected to noise or phasing. The mobile communication terminal measures the dispersion of the despreaded pilot signal (blue dots shown in Fig. 9) that is actually received by taking this single point as a reference after confirming this single point. Thereupon, in cases where the mobile communication terminal is moving, due to the effect of the Doppler shift frequency, the higher the speed of motion, the larger the distributed values of the signal. The mobile communication terminal is able to detect the speed by using these dispersed values. (2) In cases where the speed of motion thus detected is 30 km/h or less, the multi-path interference removing apparatus is started up and, in cases where the speed of motion is more than 30 km/h, the multi-path interference removing apparatus is stopped. (3) The speed detection is performed again in accordance with the update cycle (one slot, for example) of the channel matrix. (4) The processing returns to procedure (1). By following this procedure, the deterioration in the reception characteristic that is produced in cases where the multi-path interference removing apparatus is applied during high-speed motion can be suppressed.

Thereafter, a procedure for stopping the multi-path interference removing apparatus in cases where an interference wave from another cell is large will be described (See Fig. 10). (1) In cases where the mobile communication terminal is in a communication active state, the CPICH that is transmitted by the base station is despreaded to generate a delay profile while the multi-path interference removing apparatus remains stopped (See Fig. 1). (2) The desired wave signal power (S of SIR) is determined by maximum-ratio-combining reception paths on the basis of the delay profile. (3) The interference component (I of SIR) is determined by using the dispersion of dots of the reception pilot signal shown in Fig. 9 (Fig. 10 shows the size of I as an image by means of a dotted line). (4) The SIR is calculated from S and I that are obtained using procedures (2) and (3). In cases where SIR is 3dB or more, the multi-path interference removal method is activated and, in cases where SIR is 3dB or less, the multi-path interference removal method is not activated. (5) The reception SIR is re-measured in accordance with the update cycle of the matrix channel. (6) The processing then returns to procedure (1). By following such a procedure, it is possible to suppress the deterioration of the reception characteristic that arises when the multi-path interference removing apparatus is applied in cases of a low SIR where the interference from another cell is large.

## Claims

1. A mobile communication terminal (10) installed with a multi-path interference removing apparatus (30) for removing multi-path interference,
**characterized by** comprising:
• judgment module (11) for judging whether to activate the multi-path interference removing apparatus (30) on the basis of a communication-related control signal; and
• control module (12) for activating the multi-path interference removing apparatus (30) in cases where judgment that the multi-path interference removing apparatus (30) is activated is made by the judgment module (11);
wherein
• the judgment module (11) is configured to judge whether communication has started on the basis of the control signal that is transmitted to and received from a base station (10); and
• the control module (12) is configured to activate the multi-path interference removing apparatus (30) in cases where judgment that communication has started is made by the judgment module (12).

2. A method for controlling activation of a multi-path interference removing apparatus installed in a mobile communication terminal for removing multi-path interference,
the method **characterized by** comprising:
• a judgment step (S12) of judging whether to activate the multi-path interference removing apparatus on the basis of a communication-related control signal; and
• a control step (S13) of activating the multi-path interference removing apparatus in cases where judgment that the multi-path interference removing apparatus is activated is made in the judgment step;
wherein
• in the judgment step (S12), judgment is made whether communication has started on the basis of the control signal that is transmitted to and received from a base station; and
• in the control step (S13), the multi-path interference removing apparatus is activated in cases where judgment that communication has started is made in the judgment step.

## Patentansprüche

1. Mobil-Kommunikations-Endgerät (10), installiert mit einem Mehrfach-Pfad-Interferenz-Entfernungs-Apparat (30) für Entfernen von Mehrfach-Pfad-Interferenz, **gekennzeichnet durch** Aufweisen von:
• Beurteilungs-Modul (11) zum Beurteilen, ob der Mehrfach-Pfad-Interferenz-Entfernungs-Apparat (30) aktiviert werden soll, auf der Basis eines kommunikationsbezogenen Kontroll-Signals; und
• Kontroll-Modul (12) zum Aktivieren des Mehrfach-Pfad-Interferenz-Entfernungs-Apparats (30), in Fällen, wo Beurteilung, dass der Mehrfach-Pfad-Interferenz-Entfernungs-Apparat (30) aktiviert wird, gemacht wird **durch** das Beurteilungs-Modul (11);
wobei
• das Beurteilungs-Modul (11) eingerichtet ist zum Beurteilen, ob Kommunikation gestartet hat, auf der Basis des Kontroll-Signals, das übertragen wird zu und empfangen wird von einer Basis-Station (10); und
• das Kontroll-Modul (12) eingerichtet ist zum Aktivieren des Mehrfach-Pfad-Interferenz-Entfernungs-Apparats (30), in Fällen, wo Beurteilung, dass Kommunikation gestartet hat, gemacht wird von dem Beurteilungs-Modul (12).

2. Verfahren zum Kontrollieren von Aktivierung eines in einem Mobil-Kommunikations-Endgerät installierten Mehrfach-Pfad-Interferenz-Entfernungs-Apparats für Entfernen von Mehrfach-Pfad-Interferenz, das Verfahren **gekennzeichnet durch** Aufweisen von:
• einem Beurteilungs-Schritt (S12) von Beurteilen, ob der Mehrfach-Pfad-Interferenz-Entfernungs-Apparat aktiviert werden soll auf der Basis eines kommunikationsbezogenen Kontroll-Signals; und
• einem Kontroll-Schritt (S13) von Aktivieren des Mehrfach-Pfad-Interferenz-Entfernungs-Apparats in Fällen, wo Beurteilung, dass der Mehrfach-Pfad-Interferenz-Entfernungs-Apparat aktiviert wird, gemacht wird in dem Beurteilungs-Schritt;
wobei
• in dem Beurteilungs-Schritt (S12) Beurteilung gemacht wird, ob Kommunikation gestartet hat, auf der Basis des Kontroll-Signals, das übertragen wird zu und empfangen wird von einer Basis-Station; und
• in dem Kontroll-Schritt (S13) der Mehrfach-Pfad-Interferenz-Entfernungs-Apparat aktiviert wird in Fällen, wo Beurteilung, dass Kommunikation gestartet hat, gemacht wird in dem Beurteilungs-Schritt.

## Revendications

1. Terminal de communication mobile (10) installé avec un appareil d'élimination des interférences dues à la propagation par trajets multiples (30) destiné à éliminer les interférences dues à la propagation par trajets multiples ;
**caractérisé par le fait qu'**il comprend :
- un module de jugement (11) destiné à juger s'il convient d'activer l'appareil d'élimination des interférences dues à la propagation par trajets multiples (30) sur la base d'un signal de commande qui se rapporte à une communication ; et
- un module de commande (12) destiné à activer l'appareil d'élimination des interférences dues à la propagation par trajets multiples (30) dans les cas où un jugement selon lequel l'appareil d'élimination des interférences dues à la propagation par trajets multiples (30) est activé, est rendu par le module de jugement (11) ;
dans lequel :
- le module de jugement (11) est configuré de manière à juger si une communication a commencé sur la base du signal de commande qui est transmis à une station de base (10) et est reçu en provenance de celle-ci ; et
- le module de commande (12) est configuré de manière à activer l'appareil d'élimination des interférences dues à la propagation par trajets multiples (30) dans les cas où un jugement selon lequel une communication a commencé, est rendu par le module de jugement (12).

2. Procédé destiné à commander l'activation d'un appareil d'élimination des interférences dues à la propagation par trajets multiples installé dans un terminal de communication mobile destiné à éliminer les interférences dues à la propagation par trajets multiples ;
le procédé étant **caractérisée par le fait qu'**il comprend :
- une étape de jugement (S12) consistant à juger s'il convient d'activer l'appareil d'élimination des interférences dues à la propagation par trajets multiples sur la base d'un signal de commande qui se rapporte à une communication ; et
- une étape de commande (S 13) consistant à activer l'appareil d'élimination des interférences dues à la propagation par trajets multiples dans les cas où un jugement selon lequel l'appareil d'élimination des interférences dues à la propagation par trajets multiples est activé, est rendu dans l'étape de jugement ; dans lequel :
- dans l'étape de jugement (S12), un jugement est rendu selon lequel une communication a commencé sur la base du signal de commande qui est transmis à une station de base et est reçu en provenance de celle-ci ; et
- dans l'étape de commande (S13), l'appareil d'élimination des interférences dues à la propagation par trajets multiples est activé dans les cas où un jugement selon lequel une communication a commencé, est rendu dans l'étape de jugement.
